# EUROPEAN PATENT APPLICATION

(11) **EP 4 660 678 A1**
(43) Date of publication of application: **10.12.2025**
(21) Application number: 25176773.7
(22) Date of filing: 15.05.2025
(51) Int. Cl.: G02B 6/44, G02B 6/46

(54) **RETAINING ELEMENT FOR RETAINING AND SECURING A CABLE**

(30) Priority: 06.06.2024 IT 202400013042
(71) Applicant: Prysmian S.p.A., 20126 Milan (IT)
(72) Inventor: Abbiati, Fabio, 20126 Milano MI (IT)
(74) Representative: Perani & Partners S.p.A.

(57) **Abstract**

A retaining element (1) for retaining and securing a cable (2) to a cable housing (3), the retaining element (1) comprising: a first retaining wall (10) and a second retaining wall (20), the first retaining wall (10) and the second retaining wall (20) being configured to receive and retain a cable (2) therebetween; the first retaining wall (10) is configured to move with respect to the second retaining wall (20) upon application of a force on the first retaining wall (10) along an actuating direction (A-A); a support frame (30) configured to attach the first retaining wall (10) to the cable housing (3); wherein the support frame (30) comprises: a first support wall (40) configured to be attached to the cable housing (3); a first connecting member (51) and a second connecting member (52) for connecting the first support wall (40) and the first retaining wall (10), the first connecting member (51) and the second connecting member (52) being spaced apart along the actuating direction (A-A); the first and second connecting members (51. 52) are mutually parallel and are configured to move in a parallel way upon application of the force on the first retaining wall (10) along the actuating direction (A-A), to reversibly shift the first retaining wall (10) along a shifting direction (B-B) inclined with respect to the actuating direction (A-A).

## Description

### Field of the invention

The present invention relates to the field of equipment and components for the installation of optical cables and/or electrical cables to a cable housing which can be an optical (access) network, optical termination box or a distribution box for the optical cables and an electrical box for the electrical cables.

### Background of the invention

A FTTx (FTTN, FTTC, FTTB, FTTH, FTTW, FTTR, etc.) network is an optical access network providing a number of end customers with broadband communication services from operators, i.e. with services requiring data transmission at a very high rate, for example of some Mbit/s.

Typically, such network comprises a termination box or cabinet which cooperates with an access network and which is typically located in the basement of the building where the end users reside.

During installation of the optical termination box, the operator must lay down relative cables in order to correctly connect the optical fibers to optical connectors by means of optical fiber splices.

Therefore, there is a demand from the operator during installation and maintenance operations to easily and firmly connect the optical cables to the relative cable housing.

Same needs can be considered in installation of the electrical cables wherein and there is a demand from the operator during installation and maintenance operations to easily and firmly connect the electrical cables to the relative cable housing.

EP3066506 discloses an assembly for retaining and securing an optical cable comprise a retaining element and a housing. The retaining element comprises a seat configured to receive the optical cable, an insertion port configured to allow side insertion of the optical cable in the seat and at least one elastic portion configured to act on the optical cable received in the seat for retaining the optical cable. The housing has a mounting surface for removably attaching the retaining element to the housing and the mounting surface is configured to close the insertion port when the retaining element is attached to the mounting surface.

EP3221732 discloses an assembly for retaining and securing an optical cable comprises a retaining element and a housing with an insertion seat. The retaining element has a first retaining wall, a second retaining wall and a connection part connecting the first and second retaining walls. The connection part is configured to resiliently deform upon insertion of the retaining element in the insertion seat to allow mutual approach of said first and second retaining walls.

The above-mentioned retaining devices complicate the installation operations of the cables to the relative cable housing. Furthermore, the known devices can damage the cable during cable removal as well as difficulties in such operations.

### Summary of the invention

The applicant has tackled the problem of providing a retaining element able to easily retain and secure cables having different diameters and at the same time able to reduce possible damages in installation and maintenance operations.

The Applicant has found that providing a retaining element attachable to a cable housing and provided with at least a first retaining wall able to reversibly shift along a shifting direction with respect to a second retaining wall by means of a support frame connected to the cable housing and having connecting members configured to move in a parallel way upon application of the force on the first retaining wall in order to shift the first retaining wall, allows to correctly retain between the first and second retaining walls a cable having different diameters as well as to simplify such retaining reducing the damages on the cable.

Therefore, the present invention relates to a retaining element for retaining and securing a cable to a cable housing, the retaining element comprising: a first retaining wall and a second retaining wall, the first retaining wall and the second retaining wall being configured to receive and retain a cable therebetween; the first retaining wall is configured to move with respect to the second retaining wall upon application of a force on the first retaining wall along an actuating direction; a support frame configured to attach the first retaining wall to the cable housing. The support frame comprises: a first support wall configured to be attached to the cable housing; a first connecting member and a second connecting member for connecting the first support wall and the first retaining wall, the first connecting member and the second connecting member being spaced apart along the actuating direction. The first and second connecting members are mutually parallel and are configured to move in a parallel way upon application of the force on the first retaining wall along the actuating direction, to reversibly shift the first retaining wall along a shifting direction inclined with respect to the actuating direction.

According to one embodiment, the first retaining wall is reversibly shiftable along the shifting direction between a rest position and a plurality of working positions in which the first retaining wall is configured to engage the cable such that an angular orientation of the first retaining wall relative to the shifting direction is maintained passing between the rest position and the working position.

According to one embodiment, in the rest position, the first retaining wall is spaced apart from the second retaining wall along a spacing direction for a first distance and in a working position, the first retaining wall is spaced apart from the second retaining wall along the spacing direction for a second distance greater than the first distance. The first and second connecting members extend between the first support wall and the first retaining wall, the first and second connecting members being mutually parallel as the first retaining wall shifts between the rest position and the working position.

According to one embodiment, the first and second connecting members extend along an extension direction perpendicular to the first retaining wall and the first support wall.

According to one embodiment, the first and second connecting members extend along an extension direction inclined with respect to the first retaining wall and the first support wall.

According to one embodiment, the first and second connecting members being configured to reversibly switch between an undeformed configuration and a deformed configuration. The first and second connecting members are configured to switch from the undeformed configuration to the deformed configuration upon application of force on the first retaining wall along the actuating direction and to switch from the deformed configuration to the undeformed configuration upon release of the force.

According to one embodiment, the first retaining wall extends between first and second lateral portions spaced apart along a first direction and between first and second base portions spaced apart along a second direction perpendicular to the first direction, the first retaining wall having a retaining surface configured to engage the cable and opposed connecting surfaces configured to be connected to the first support wall. The second direction is perpendicular to a housing plane defined by the cable housing and the first direction is parallel to the housing plane.

According to one embodiment, the first connecting member and the second connecting member respectively protrude at the first base portion and at the second base portion and are mutually spaced apart along the second direction. The actuating direction is parallel to the second direction. The first connecting member and the second connecting member are configured to move upon application of a force on the first base portion or on the second base portion. The first retaining wall is configured to shift along the shifting direction inclined with respect to the second direction towards the first support wall.

According to one embodiment, the first connecting member and the second connecting member respectively protrude at the first lateral portion and at the second lateral portion and are mutually spaced apart along the first direction. The actuating direction is parallel to the first direction. The first connecting member and the second connecting member are configured to move upon application of a force on the first lateral portion or on the second lateral portion. The first retaining wall is configured to shift along the shifting direction inclined with respect to the first direction towards the first support wall.

According to one embodiment, the support frame is formed in one-piece with the first retaining wall.

According to one embodiment, the first connecting member and the second connecting member are configured to resiliently move upon application of the force on the first retaining wall to reversibly shift the first retaining wall along the shifting direction.

According to one embodiment, the retaining element comprises a further support frame configured to attach the second retaining wall to the cable housing. The second retaining wall is configured to move with respect to the first retaining wall upon application of a force on the second retaining wall along the actuating direction.

According to one embodiment, the first retaining wall and the second retaining wall comprise retaining teeth configured to act on the cable.

The present invention further relates to an assembly for retaining and securing a cable. The assembly comprises a cable housing comprising a base module, the base module defining a housing plane and a retaining element configured to retain and secure a cable to the cable housing, the retaining element being coupled with the cable housing.

According to one embodiment, the cable housing comprises one or more stopping elements configured to limit a stroke of the first retaining wall upon application of a force.

According to one embodiment, the retaining element is made in one piece with the cable housing.

According to one embodiment, the assembly further comprising a cable.

### Brief description of the drawings

Further characteristics and advantages will become more apparent by reading the following detailed description of some embodiments given as examples with reference to the accompanying drawings, wherein:
FIG. 1 is perspective view of the retaining element according to one embodiment of the present invention;
FIG. 2 is a top view of the retaining element of FIG. 1;
FIG. 3 is a top view of the of the retaining element according to one embodiment of the present invention
FIG. 4 is a schematic front view of the retaining element of the FIG. 1 in a first configuration;
FIG. 5 is a schematic front view of the retaining element of the FIG. 1 in a second configuration;
FIG. 6 is perspective view of the retaining element according to one embodiment of the present invention;
FIG. 7 is a top view of the retaining element of FIG.6;
FIG. 8 is a schematic front view of the retaining element of the FIG. 6 in a first configuration;
FIG. 9 is a schematic front view of the retaining element of the FIG. 6 in a second configuration;
FIG. 10 is a top view of the of the retaining element according to one embodiment of the present invention
FIG. 11 is a schematic front view of the retaining element of the FIG. 10 in a first configuration;
FIG. 12 is a schematic front view of the retaining element of the FIG. 10 in a second configuration.

### Detailed description

For the purposes of the present description and claims a cable is deemed to be an optical, electrical or hybrid cable.

An optical cable comprises one or more optical fiber units, an outer sheath and, optionally, flexible strength members. An electrical cable comprises one or more conductive wire and an outer sheath. A hybrid cable comprises one or more optical cables and one or more electrical cables.

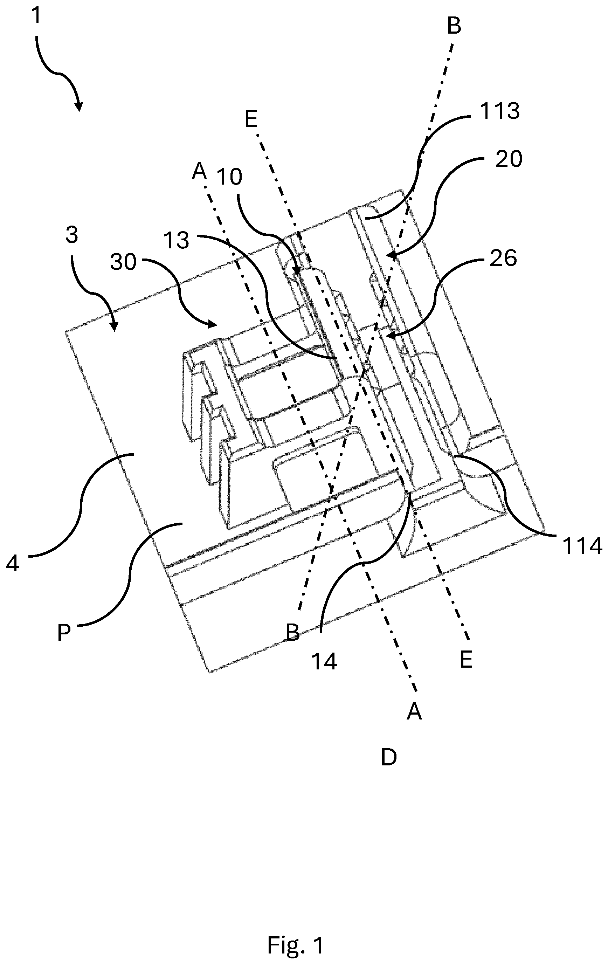

Figures 1 shows a retaining element 1 for retaining and securing a cable 2.

The retaining element 1 retains and secures a cable 2 to a cable housing 3. Namely, the retaining element 1 is configured to attach the cable 2 to the cable housing 3.

For the purposes of the present description and claims, the cable housing is deemed to be a termination box or cable connectivity enclosure in case of optical cables and electrical box in case of electrical cables or a combination thereof in case of hybrid cables.

The retaining element 1 comprises a first retaining wall 10 and a second retaining wall 20.

The first retaining wall 10 and the second retaining wall 20 are configured to receive and retain a cable 2 therebetween.

It is to be noted that the first retaining wall 10 and the second retaining wall 20 are mutually spaced apart along a spacing direction X-X. The spacing direction X-X can be perpendicular to the first and second retaining walls 10, 20.

The first retaining wall 10 and the second retaining wall 20 define an insertion opening 26 through which the cable 2 firstly passes upon insertion of the cable between the first retaining wall 10 and the second retaining wall 20.

According to one embodiment, the first retaining wall 10 extends between first and second lateral portions 11, 12 spaced apart along a first direction D-D and between first and second base portions 13, 14 spaced apart along a second direction E-E perpendicular to the first direction D-D.

The first retaining wall 10 has a retaining surface 10a configured to engage the cable 2 and opposed connecting surfaces 10b.

The second retaining wall 20 has the same features of the first retaining wall 10 with references increased of 100.

According to one embodiment, the first retaining wall 10 and the second retaining wall 20 comprise retaining teeth 15, 25 configured to act on the cable. The retaining teeth 15, 25 are formed at the retaining surface 10a, 110a.

According to one embodiment, the second direction E-E is perpendicular to a housing plane P defined by the cable housing 3 and the first direction D-D is parallel to the housing plane P. Namely, the second retaining wall 20 can extend from the cable housing 3.

The first and second retaining wall 10, 20 can have retaining portions at a retaining surface 10a, 110a configured to receive the cable 2 therebetween and insertion portions configured to allow insertion of the cable 2 towards the retaining portions at the first base portions 13, 113 more distant from the housing plane P with respect to the second base portions 14, 114. The retaining teeth 15, 25 are formed at the retaining portions.

Accordingly, the insertion portions define therebetween an insertion area 27 and retaining portions define therebetween a retaining area 28.

The insertion portions can mutually diverge defining a V shaped insertion area. By this arrangement, the cable 2 is easily inserted between first and second retaining walls 10, 20. This reduces the installation time of the cable 2.

It is to be noted that the first and the second retaining walls 10, 20 are configured to receive the cable 2 extending along a cable direction F-F between the first and second lateral portions 11, 12, 111, 112.

Accordingly, the first and the second retaining walls 10, 20 are configured to retain the cable 2 along the cable direction F-F and to prevent the relative sliding of the cable with respect to the retaining element 1 and then to the cable housing 3. It is to be noted that the cable 2 is inserted between the first and the second retaining walls 10, 20 along an insertion direction Z-Z parallel to the second direction E-E.

Namely, the insertion opening 26 is defined at the first base portion portions 13, 113 and extends longitudinally between the first and second lateral portions 11, 12, 111, 112 and transversally between first base portion portions 13, 113.

In detail, the first and second lateral portions 11, 12, 111, 112 define respectively a first 29a and a second opening 29b for passage of the cable 2 along the cable direction C. In detail, the first and second retaining walls 10, 20 are configured to receive the optical cable 2 passing through the first opening 29a and second opening 29b. More in detail, the first opening 29a and second opening 29b extend along the second direction E-E and the spacing direction X-X.

The first retaining wall 10 is configured to move with respect to the second retaining wall 20 upon application of a force on the first retaining wall 10 along an actuating direction A-A.

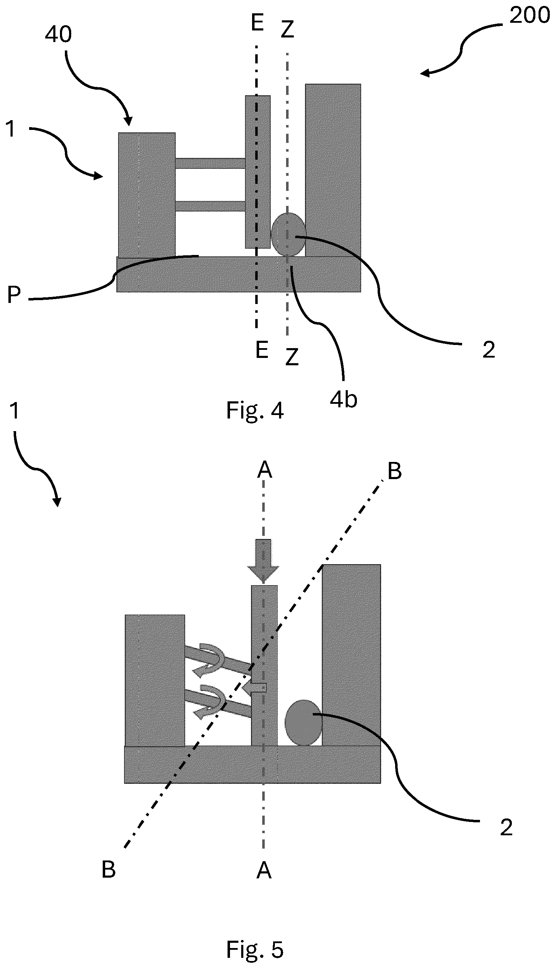

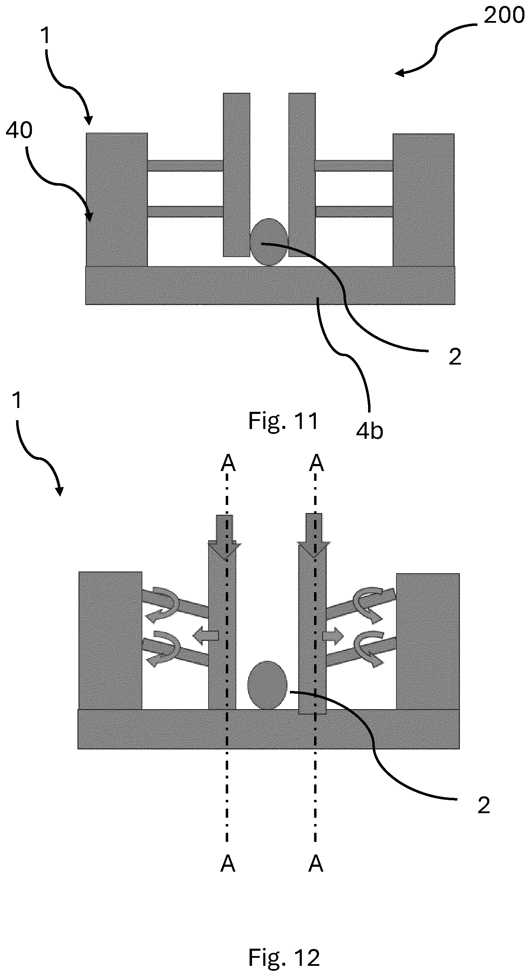

For example, the force applied to the first retaining wall 10 along an actuating direction A-A is represented with the largest linear arrows at the first base portion 13 and at the lateral portion 12 in figures 5, 9 and 12.

Namely, the first retaining wall 10 is configured to be spaced apart from the second retaining wall 20 upon application of a force on the first retaining wall 10 along the actuating direction A-A and then to come back towards the second retaining wall 20 upon release of the force.

The retaining element 1 comprises a support frame 30 configured to attach the first retaining wall 10 to the cable housing 3. The support frame 30 is configured to shift the first retaining wall 10 along a shifting direction B-B inclined with respect to the actuating direction A-A.

The support frame 30 comprises a first support wall 40 configured to be attached to the cable housing 3.

According to one embodiment, the first support wall 40 extends between a first end portion 42 at the cable housing 3 and a second free end portion 41 opposite with respect to the first end portion along an extension direction. The first support wall 40 can extend along the second direction E-E.

The support frame 30 comprises a first connecting member 51 and a second connecting member 52 for connecting the first support wall 40 and the first retaining wall 10.

The first connecting member 51 and the second connecting member 52 are spaced apart along the actuating direction A-A. Namely, the first connecting member 51 and the second connecting member 52 are mutually spaced apart along the actuating direction A-A that is a direction along which a force to move the retaining wall 10 is applied.

The first and second connecting members 51, 52 are mutually parallel and are configured to move in a parallel way upon application of the force on the first retaining wall 10 along the actuating direction A-A, to reversibly shift the first retaining wall 10 along the shifting direction B-B inclined with respect to the actuating direction A-A.

Namely, the shifting direction B-B can be defined by the composition of the movements of the first retaining wall 10 along the actuating direction A-A and along the spacing direction X-X. In detail, the first retaining wall 10 is pushed by the force along the actuating direction A-A. However, the first and second connecting members 51, 52 force the first retaining wall 10 to deviate towards the first support wall 40 moving the first retaining wall 10 along the spacing direction X-X away from the second retaining wall 20.

It is to be noted that relative distance between the first and second connecting members 51, 52 is substantially constant during shifting of the first retaining wall 10.

According to one embodiment, the first and second connecting members 51, 52 are configured to reversibly switch between an undeformed configuration and a deformed configuration.

Namely, the first and second connecting members 51, 52 are configured to switch from the undeformed configuration to the deformed configuration upon application of force on the first retaining wall 10 along the actuating direction A-A and to switch from the deformed configuration to the undeformed configuration upon release of the force.

According to one embodiment, the first connecting member 51 and the second connecting member 52 are configured to resiliently move upon application of the force on the first retaining wall 10 to reversibly shift the first retaining wall 10 along the shifting direction B-B.

In detail, the first and second connecting members 51, 52 are configured to elastically deform from the first retaining wall 10 to the first support wall 40 due to the force along the actuating direction A-A. Consequently, the first and second connecting members 51, 52 generate a contrary elastic force. Specifically, the generated force is directed towards the cable 2 upon insertion of the cable 2 between the first and second retaining walls 10, 20.

According to one embodiment, the first and second connecting members 51, 52 can comprise a resilient portion or are substantially entirely resilient.

According to one embodiment as shown in figures 4, 5, 8, 9, 11, 12, the first retaining wall 10 is reversibly shiftable along the shifting direction B-B between a rest position and a plurality of working positions in which the first retaining wall 10 is configured to engage the cable 2 such that an angular orientation of the first retaining wall 10 relative to the shifting direction B-B is maintained passing between the rest position and the working position.

Namely, the first retaining wall 10 in the rest position is parallel to the first retaining wall 10 in the working positions.

According to one embodiment, in the rest position, the first retaining wall 10 is spaced apart from the second retaining wall 20 along the spacing direction X-X for a first distance. In a working position, the first retaining wall 10 is spaced apart from the second retaining wall 20 along the spacing direction X-X for a second distance greater than the first distance as shown in figures 4, 5, 8, 9, 11, 12.

Namely, the first and second connecting members 51, 52 extend between the first support wall 40 and the first retaining wall 10. The first and second connecting members 51, 52 are mutually parallel as the first retaining wall 10 shifts between the rest position and the working position. In detail, the connecting surface 10b of the first retaining wall 10 is configured to be connected to the first support wall 40 by means of the first and second connecting members 51, 52.

The first and second connecting members 51, 52 comprise a relative connecting element 51a, 52a extending between the support wall 40 and the retaining wall 10. The connecting element 51a, 52a are mutually parallel as the first retaining wall 10 shifts between the rest position and the working position.

The connecting element 51a, 52a can be rod shaped.

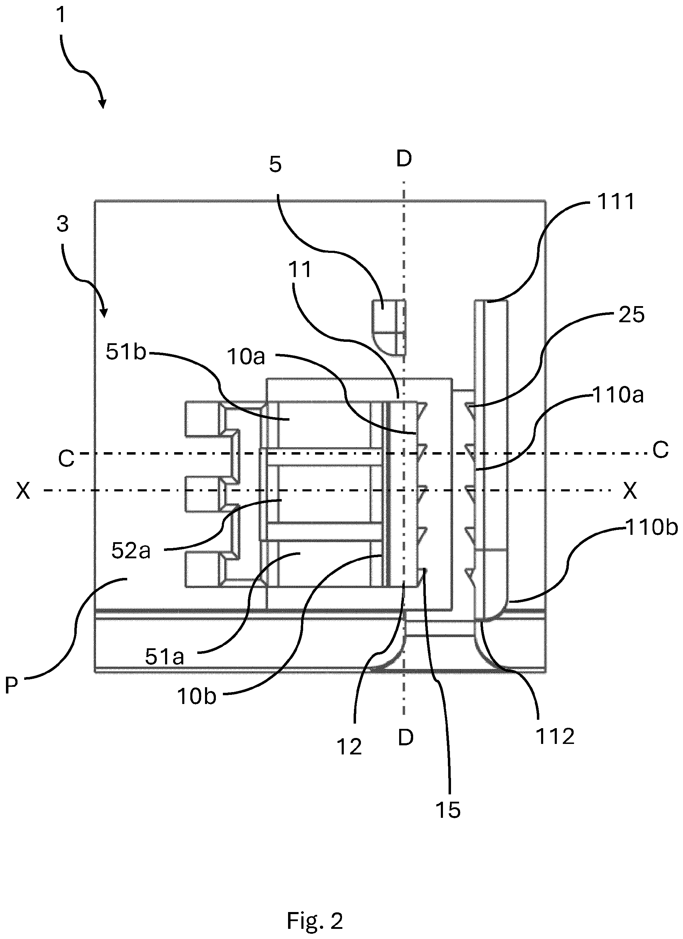

According to a preferred embodiment as shown in figures 1 and 2, the first and second connecting members 51, 52 extend along an extension direction C-C perpendicular to the first retaining wall 10 and the first support wall 40. Namely, the extension direction C-C is parallel to the spacing direction X-X and perpendicular to the first retaining wall 10 and to the first support wall 40.

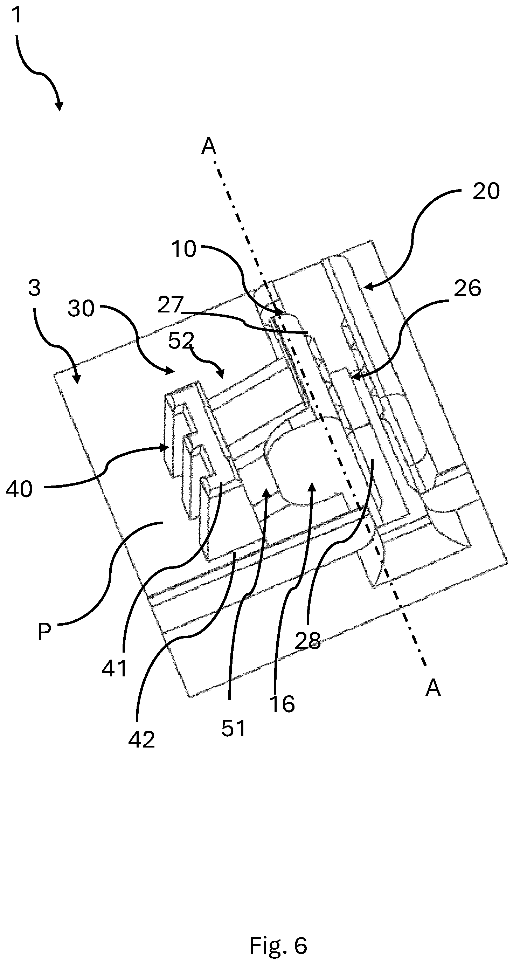

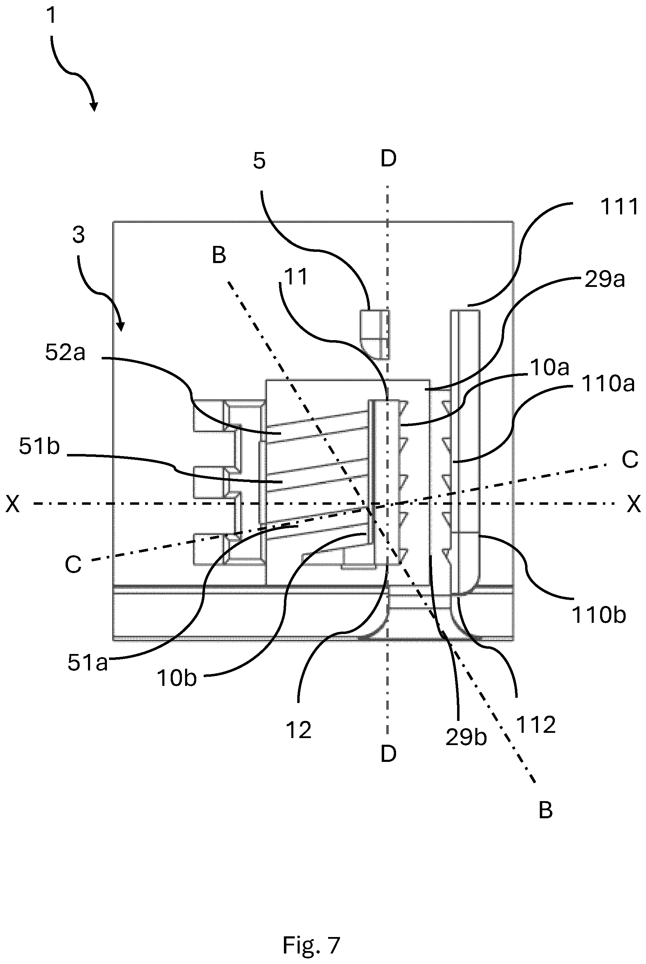

According to a preferred embodiment as shown in figures 6 and 7, the first and second connecting members 51, 52 extend along an extension direction C-C inclined with respect to the first retaining wall 10 and the first support wall 40. Namely, the extension direction C-C is inclined with respect to the spacing direction X-X and then to the first retaining wall 10 and to the first support wall 40.

It is to be noted that in both embodiments, the connecting elements 51a, 52a of the first and second connecting members 51, 52 can have a same distance from the housing plane P along the extension direction C-C. Such distance can be different for each the connecting elements 51a, 52a .

According to the embodiment shown in figures 6 and 7, thanks to the inclination of the first and second connecting members 51, 52, a sliding of the cable along the cable direction F-F would cause an approaching of the first retaining wall 10 to the second retaining wall 20 increasing the retaining force on the cable 2.

Alternatively or in combination with the previous embodiment, the connecting elements 51a, 52a can have a variable distance from the housing plane P increasing from the first support wall 40 to the first retaining wall 10. In detail, the connecting elements 51a, 52a extend between the first end portion 42 and the first base portion 13 at different distance from the housing plane P.

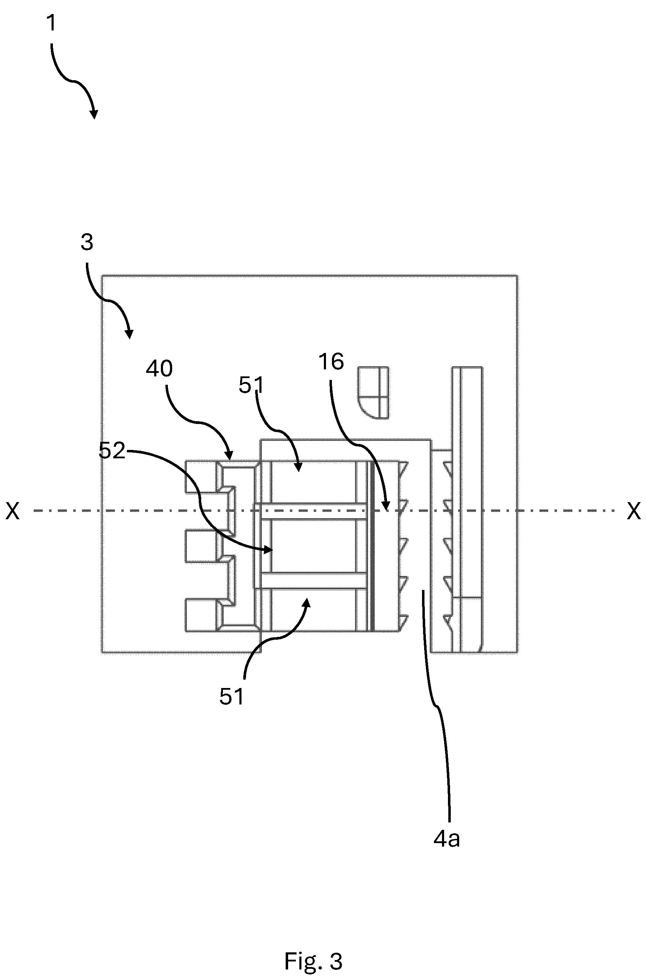

According to one embodiment as shown in the figures 1-6, the first connecting member 51 and the second connecting member 52 can respectively protrude at the first base portion 13 and at the second base portion 14 and are mutually spaced apart along the second direction E-E. Namely, the first connecting member 51 and the second connecting member 52 are at different distance from the housing plane P wherein the first connecting member 51 has distance from the housing plane P greater than the distance of the second connecting member 52 from the housing plane P.

The first connecting member 51 can comprises first connecting elements 51a, 51b mutually spaced apart along the first direction D-D. The connecting elements 51a, 51b, 52a can also be offset with respect to the first direction D-D.

In the present embodiment, the actuating direction A-A is parallel to the second direction E-E. Therefore, the first connecting member 51 and the second connecting member 52 are configured to move upon application of a force on the first base portion 13 or on the second base portion 14. According to the present embodiment, the first retaining wall 10 is configured to shift along the shifting direction B-B inclined with respect to the second direction E-E towards the first support wall 40. In the present case, the shifting direction B-B is incident to the housing plane P.

For example, as shown in figure 5, the force causes an inclination the first and second connecting member 51, 52 as indicated with the rotating arrows and a movement of the first retaining wall 10 towards the first support wall 40 as indicated with the arrow towards the support wall 40.

The first retaining wall 10 can comprise a pushing element 16 to simplify force application. Such pushing element 16 protrudes from the retaining wall 10 at the first base portion 13.

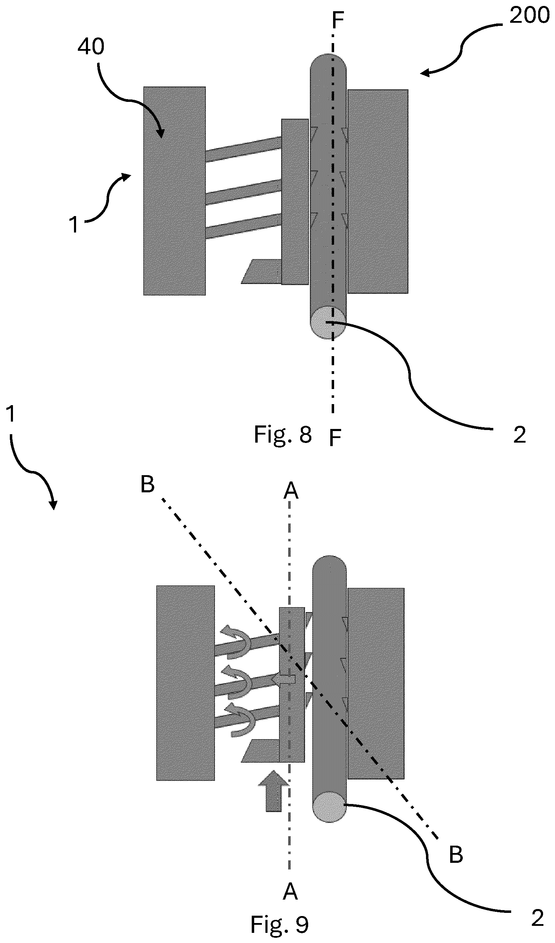

According to one embodiment as shown in the figures 7 and 8, the first connecting member 51 and the second connecting member 52 can respectively protrude at the first lateral portion 11 and at the second lateral portion 12 and are mutually spaced apart along the first direction D-D. Namely, the first connecting member 51 and the second connecting member 52 present a distance from the housing plane P substantially equal.

It is to be noted that first connecting member 51 can comprise first connecting elements 51a, 51b mutually spaced apart along the second direction E-E wherein one of the first connecting elements 51a, 51b is offset with respect to the first direction D-D. Namely, the first connecting elements 51a has a distance from the housing plane P lower than the first connecting elements 51b.

According to the present embodiment, the actuating direction A-A is parallel to the first direction D-D. Therefore, the first connecting member 51 and the second connecting member 52 are configured to move upon application of a force on the first lateral portion 11 or on the second lateral portion 12. According to the present embodiment, the first retaining wall 10 is configured to shift along the shifting direction B-B inclined with respect to the first direction D-D towards the first support wall 40. In the present case, the shifting direction B-B is parallel to the housing plane P.

For example, as shown in figure 9, the force causes an inclination of the first and second connecting member 51, 52 as indicated with the rotating arrows and a movement of the first retaining wall 10 towards the first support wall 40 as indicated with arrow towards the first support wall 40.

The first retaining wall 10 can comprise a pushing element 16 to simplify force application. Such pushing element 16 protrudes from the retaining wall 10 at the second lateral portion 14.

According to one embodiment, the support frame 30 is formed in one-piece with the first retaining wall 10.

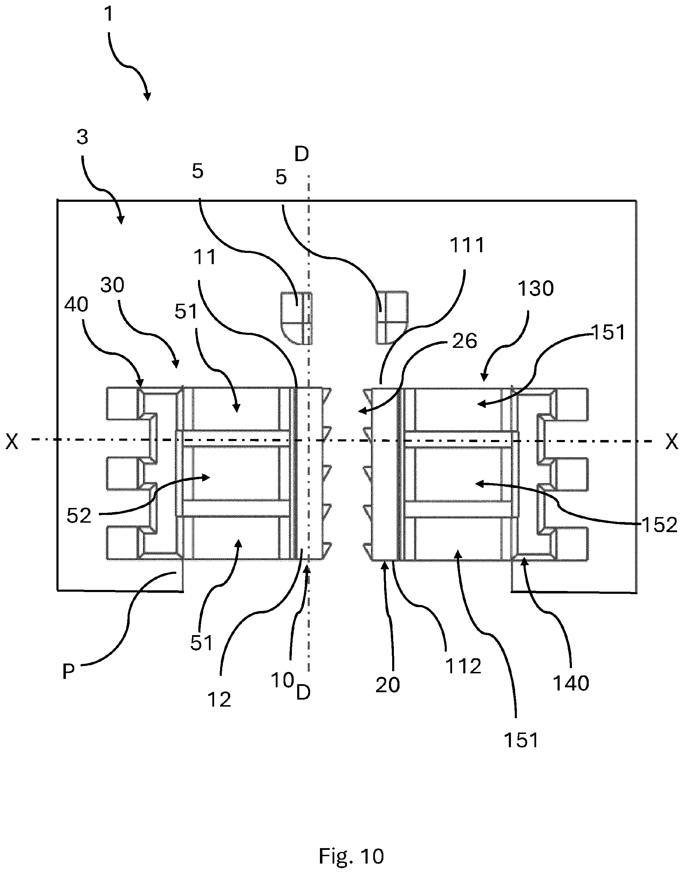

According to one embodiment as shown in figures 10, 11, 12, the retaining element 1 comprises a further support frame 130 configured to attach the second retaining wall 20 to the cable housing 3. Namely, the second retaining wall 20 is configured to move with respect to the first retaining wall 10 upon application of a force on the second retaining wall 20 along the actuating direction A-A.

The support frame 130 associated to the second retaining wall 20 has the same technical feature of support frame 30 associated to the first retaining wall 10. The references to the support frame 130 are increased of 100 with respect to the support frame 30. Therefore, in the present embodiment, the second retaining wall 20 is shiftable between the rest position and working position in a mirror-like manner with respect to the first retaining wall 10. Namely, the support frame 130 comprises a second support wall 140 and relative first and second connecting member 151, 152.

It is further object of the present invention an assembly 200 for retaining and securing a cable 2.

The assembly 200 comprises a cable housing 3 comprising a base module 4. It is to be noted that the base module 4 defines a housing plane P.

The assembly 200 comprises one or more retaining elements 1 coupled with the cable housing 3.

Namely, the retaining element 1 extends from the base module 4. According to one embodiment, the first support wall 40 and eventually the second support wall 140 extend from the base module along perpendicular or inclined with respect to the housing plane P. The first and second retaining walls 10, 20 are mutually parallel and the relative second direction D-D is perpendicular to the housing plane P.

The base module 4 can comprise an opening 4a between the first and second retaining walls 10, 20 such that the cable 2 is retained in a suspended manner. Alternatively, the base module 4 can comprise a seat wall 4b between the first and second retaining walls 10, 20 such that the cable 2 can abut against the seat wall 4b

According to one embodiment, the assembly 200 can comprise one or more stopping elements 5 configured to limit a stroke of the first retaining wall 10 upon application of a force. Namely, the stopping members 5 can be formed on the base module 4 along the shifting direction B-B such that the first and second retaining wall 10, 20 abuts against such stopping members 5 to limit the shift.

According to one embodiment, the stopping member 5 can comprise a protrusion configured to abut against a lateral portion 11, 12, 111, 113 and/or can comprise a base module portion configured to abut against a base portion 13, 14, 113, 114.

According to one embodiment, the retaining element 1 is made in one piece with the cable housing 3.

According to one embodiment, the retaining element 1 further comprises a cable 2.

## Claims

1. A retaining element (1) for retaining and securing a cable (2) to a cable housing (3), the retaining element (1) comprising:
- a first retaining wall (10) and a second retaining wall (20), the first retaining wall (10) and the second retaining wall (20) being configured to receive and retain a cable (2) therebetween; the first retaining wall (10) is configured to move with respect to the second retaining wall (20) upon application of a force on the first retaining wall (10) along an actuating direction (A-A);
- a support frame (30) configured to attach the first retaining wall (10) to the cable housing (3);
wherein the support frame (30) comprises:
- a first support wall (40) configured to be attached to the cable housing (3);
- a first connecting member (51) and a second connecting member (52) for connecting the first support wall (40) and the first retaining wall (10), the first connecting member (51) and the second connecting member (52) being spaced apart along the actuating direction (A-A);
- the first and second connecting members (51. 52) are mutually parallel and are configured to move in a parallel way upon application of the force on the first retaining wall (10) along the actuating direction (A-A), to reversibly shift the first retaining wall (10) along a shifting direction (B-B) inclined with respect to the actuating direction (A-A).

2. The retaining element (1) according to claim 1, wherein the first retaining wall (10) is reversibly shiftable along the shifting direction (B-B) between a rest position and a plurality of working positions in which the first retaining wall is configured to engage the cable (2) such that an angular orientation of the first retaining wall (10) relative to the shifting direction (B-B) is maintained passing between the rest position and the working position.

3. The retaining element (1) according to claim 2, wherein:
- in the rest position, the first retaining wall (10) is spaced apart from the second retaining wall (20) along a spacing direction (X-X) for a first distance,
- in a working position, the first retaining wall (10) is spaced apart from the second retaining wall (20) along the spacing direction (X-X) for a second distance greater than the first distance,
- the first and second connecting members (51, 52) extend between the first support wall (40) and the first retaining wall (10), the first and second connecting members (51, 52) being mutually parallel as the first retaining wall (10) shifts between the rest position and the working position.

4. The retaining element (1) according to claim 3, wherein the first and second connecting members (51, 52) extend along an extension direction (C-C) perpendicular to the first retaining wall (10) and the first support wall (40).

5. The retaining element (1) according to claim 3, wherein the first and second connecting members (51, 52) extend along an extension direction (C-C) inclined with respect to the first retaining wall (10) and the first support wall (40).

6. The retaining element (1) according to any claims 1 to 5, wherein:
- the first and second connecting members (51, 52) being configured to reversibly switch between an undeformed configuration and a deformed configuration;
- the first and second connecting members (51, 52) are configured to switch from the undeformed configuration to the deformed configuration upon application of force on the first retaining wall (10) along the actuating direction (A-A) and to switch from the deformed configuration to the undeformed configuration upon release of the force.

7. The retaining element (1) according to any claims 1 to 6, wherein:
- the first retaining wall (10) extends between first and second lateral portions (11, 12) spaced apart along a first direction (D-D) and between first and second base portions (13, 14) spaced apart along a second direction (E-E) perpendicular to the first direction (D-D), the first retaining wall (10) having a retaining surface (10a) configured to engage the cable (2) and opposed connecting surfaces (10b) configured to be connected to the first support wall (40);
- the second direction (E-E) being perpendicular to a housing plane (P) defined by the cable housing (3) and the first direction (D-D) being parallel to the housing plane (P).

8. The retaining element (1) according to claim 7, wherein:
- the first connecting member (51) and the second connecting member (52) respectively protrude at the first base portion (13) and at the second base portion (14) and are mutually spaced apart along the second direction (E-E);
- the actuating direction (A-A) is parallel to the second direction (E-E);
- the first connecting member (51) and the second connecting member (52) being configured to move upon application of a force on the first base portion (13) or on the second base portion (14);
- the first retaining wall (10) being configured to shift along the shifting direction (B-B) inclined with respect to the second direction (E-E) towards the first support wall (40).

9. The retaining element (1) according to claim 7, wherein:
- the first connecting member (51) and the second connecting member (52) respectively protrude at the first lateral portion (11) and at the second lateral portion (12) and are mutually spaced apart along the first direction (D-D);
- the actuating direction (A-A) is parallel to the first direction (D-D);
- the first connecting member (51) and the second connecting member (52) being configured to move upon application of a force on the first lateral portion (11) or on the second lateral portion (12);
- the first retaining wall (10) being configured to shift along the shifting direction (B-B) inclined with respect to the first direction (D-D) towards the first support wall (40).

10. The retaining element (1) according to any claims 1 to 9, wherein the support frame (30) is formed in one-piece with the first retaining wall (10).

11. The retaining element (1) according to any claims 1 to 10 wherein the first connecting member (51) and the second connecting member (52) are configured to resiliently move upon application of the force on the first retaining wall (10) to reversibly shift the first retaining wall (10) along the shifting direction (B-B).

12. The retaining element (1) according to any claims 1 to 11, comprising a further support frame (130) configured to attach the second retaining wall (20) to the cable housing (3); the second retaining wall (20) being configured to move with respect to the first retaining wall (10) upon application of a force on the second retaining wall (20) along the actuating direction (A-A).

13. The retaining element (1) according to any claims 1 to 12, wherein the first retaining wall (10) and the second retaining wall (20) comprise retaining teeth (15, 25) configured to act on the cable.

14. An assembly (200) for retaining and securing a cable (2), said assembly (200) comprising:
- a cable housing (3) comprising a base module (4), the base module (4) defining a housing plane (P);
- a retaining element (1) according to any claims 1 to 13 and configured to retain and secure a cable (2) to the cable housing (3), the retaining element (1) being coupled with the cable housing (3).

15. The assembly (200) according to claim 14, wherein the cable housing (3) comprises one or more stopping elements (5) configured to limit a stroke of the first retaining wall (10) upon application of a force.

16. The assembly (200) according to claim 14 or 15, wherein the retaining element (1) is made in one piece with the cable housing (3).

17. The assembly (200) according to any claims 14 to 16, further comprising a cable (2).
